# EUROPÄISCHE PATENTANMELDUNG

(11) **EP 1 326 181 A2**
(43) Veröffentlichungstag der Anmeldung: **09.07.2003**
(21) Anmeldenummer: 02102418.7
(22) Anmeldetag: 07.10.2002
(51) Int. Cl.: G06F 17/30

(54) **Benutzerdatenadministration für ein Internettelephonsystem**

(30) Priorität: 10.10.2001 DE 10149977
(71) Anmelder: SIEMENS AKTIENGESELLSCHAFT, 80333 München (DE)
(72) Erfinder: Hemkemeyer, Dieter, 59302, Ölde (DE); Klepp, Christian, 8047, Graz (AT); Scheering, Christian, 33689, Bielefeld (DE); Öllinger, Markus, 8042, Graz (AT)

(57) **Zusammenfassung**

Erläutert wird ein Verfahren bei dem mit Hilfe eines zentralen Verfahrens (14) auf ein Nutzerkennzeichen (N1) zugegriffen wird, das einen Nutzer (N1) bezeichnet, der ein Betriebsmittel nutzt oder nutzen möchte, dessen Funktion durch ein Anwendungsprogramm (24) erbracht wird. Mit Hilfe des zentralen Verfahrens (14) wird zu dem Nutzerkennzeichen (N1) ein Konfigurationskennzeichen (R1) gespeichert, mit dessen Hilfe ein Konfigurationsverfahren (16) ausgeführt werden kann.

## Beschreibung

Die Erfindung betrifft unter anderem ein Verfahren zum Zugriff auf Nutzerdaten, die üblicherweise ein Nutzerkennzeichen und Anwendungsdaten enthalten. Das Nutzerkennzeichen bezeichnet einen Nutzer eines Betriebsmittels, dessen Funktionen durch ein Anwendungsprogramm erbracht werden. Das Anwendungsprogramm greift beim Erbringen der Funktionen des Betriebsmittels auf die Anwendungsdaten zu. Die Anwendungsdaten müssen jedoch vor der Nutzung des Betriebsmittels an den Nutzer angepasst werden. In diesem Zusammenhang wird auch von Konfigurieren gesprochen.

Üblicherweise wird die Konfiguration mit Hilfe des Anwendungsprogramms selbst ausgeführt. Benutzt ein Nutzer mehrere Anwendungsprogramme, so sind voneinander unabhängige Konfigurationsverfahren auszuführen. Die Konfiguration mit Hilfe des Anwendungsprogramms bietet den Vorteil, dass Änderungen des Konfigurationsverfahrens gleichzeitig mit Änderungen des Anwendungsprogramms durchgeführt werden können. Das bekannte Verfahren ist deshalb weit verbreitet.

Dennoch ist es Aufgabe der Erfindung, ein verbessertes Verfahren zum Zugriff auf Nutzerdaten anzugeben, das insbesondere einfach ist und insbesondere die Erfordernisse einer kohärenten Änderung von Nutzdaten sowie das Erfordernis der Konsistenz der Nutzdaten erfüllt. Außerdem sollen ein zugehöriges Programm, eine zugehörige Datenverarbeitungsanlage und eine zugehörige Datenstruktur angegeben werden.

Die auf das Verfahren bezogene Aufgabe wird durch die im Patentanspruch 1 angegebenen Verfahrensschritte gelöst. Weiterbildungen sind in den Unteransprüchen angegeben.

Im Rahmen der Erfindung bedeutet eine kohärente Änderung von Daten, dass Daten, die mehrfach in einem Rechnernetz oder auf einem Rechner gespeichert sind, von mehreren Stellen aus geändert werden können und dass die Änderungen an allen Stellen durchgeführt werden, an denen die betreffenden Daten gespeichert sind. Das Erfordernis der Konsistenz ist erfüllt, wenn sich die für einen Nutzer gespeicherten Daten nicht im Widerspruch zu anderen für diesen Nutzer gespeicherten Daten befinden.

Die Erfindung geht von der Überlegung aus, dass es möglich sein sollte, bestimmten Nutzern Betriebsmittel wahlweise mit Hilfe eines speziellen Anwendungsprogramms oder mit Hilfe eines übergeordneten Verwaltungsprogramms zuzuordnen. Das übergeordnete Verwaltungsprogramm erleichtert insbesondere das konsistente Löschen von Nutzerdaten, die sich auf einen bestimmten Nutzer beziehen, weil es alle Betriebsmittel ermitteln kann, die dem Nutzer zugeordnet sind. Ein Anwendungsprogramm hat dagegen nur eine begrenzte Sicht auf die Betriebsmittel, nämlich nur auf das Betriebsmittel, dessen Funktionen es erbringt. Andererseits geht die Erfindung aber auch von der Erkenntnis aus, dass trotz der Verwendung eines übergeordneten Verwaltungsprogramms die eigentliche Konfiguration der Anwendungsdaten bei speziellen Konfigurationsverfahren verbleiben sollte, die beispielsweise Bestandteil des Anwendungsprogramms sind.

Deshalb wird beim erfindungsgemäßen Verfahren mit Hilfe eines zentralen Verfahrens auf ein Nutzerkennzeichen zugegriffen, das einen Nutzer bezeichnet, der ein Betriebsmittel nutzt oder nutzen möchte, dessen Funktionen durch ein Anwendungsprogramm erbracht werden. Mit Hilfe des zentralen Verfahrens wird außerdem zu dem Nutzerkennzeichen ein Konfigurationskennzeichen gespeichert, mit dessen Hilfe ein Konfigurationsverfahren ausgeführt werden kann.

Mit Hilfe des Konfigurationsverfahrens wird auf Anwendungsdaten zugegriffen, welche das Anwendungsprogramm bei der Nutzung des Betriebsmittels durch den Nutzer liest oder gelesen hat. Außerdem gibt es beim erfindungsgemäßen Verfahren eine zentrale Zugriffsart oder eine dezentrale Zugriffsart, die wahlweise ausgeführt werden können. In der zentralen Zugriffsart wird ausgehend von dem zentralen Verfahren das Konfigurationsverfahren unter Verwendung das Konfigurationskennzeichen ausgeführt. Bei der dezentralen Zugriffsart wird beim Ausführen des Konfigurationsverfahrens das Nutzerkennzeichen und/oder das Konfigurationskennzeichen für das zentrale Verfahren zugänglich gemacht und durch das zentrale Verfahren bearbeitet.

Zugriff bedeutet entweder eine Erzeugung, eine Zuordnung, eine Konfiguration bzw. eine Löschung von Daten. Mit Hilfe des zentralen Verfahrens werden also einem Nutzerkennzeichen lediglich Konfigurationskennzeichen zugeordnet, z.B. Kennzeichen für bestimmte Betriebsmittel oder Verweise auf die zu bestimmten Betriebsmitteln gehörenden Konfigurationsverfahren bzw. Konfigurationsprogramme. Für die zentrale Sicht müssen also zu einem Nutzerkennzeichen nur Betriebsmittel zugeordnet werden, ohne dass das zentrale Verfahren Details zur eigentlichen Konfiguration benötigt. Die eigentliche Konfiguration der Betriebsmittel erfolgt durch eine Delegierung der Konfiguration von dem zentralen Verfahren an die speziellen Konfigurationsverfahren.

In der dezentralen Zugriffsart wird zunächst das Konfigurationsverfahren ausgeführt. Anschließend wird beispielsweise automatisch eine Nachführung der eingetretenen Änderungen im Hinblick auf die vom zentralen Verfahren verwalteten Nutzerkennzeichen und Betriebsmittel durchgeführt. Lokale Änderungen werden nur weitergegeben, wenn zentral gespeicherte Daten geändert werden müssen. Diese Vorgehensweise wird auch als Lokalitätsprinzip bezeichnet.

Durch das erfindungsgemäße Verfahren wird insbesondere ein automatisches Löschen der Daten eines Nutzers bzw. von Teilen dieser Daten erleichtert, weil das zentrale Verfahren nacheinander automatisch mehrere Konfigurationsverfahren aufruft, die über die Konfigurationskennzeichen ermittelbar sind. Weitere Vorzüge des erfindungsgemäßen Verfahrens werden an Hand der weiteren Erläuterungen deutlich.

Bei einer Weiterbildung des erfindungsgemäßen Verfahrens werden mit Hilfe des zentralen Verfahrens mindestens ein weiteres Konfigurationskennzeichen zu dem Nutzerkennzeichen oder zu einem anderen Nutzerkennzeichen vermerkt. Mit Hilfe des weiteren Konfigurationskennzeichens wird in der zentralen Zugriffsart ein weiteres Konfigurationsverfahren gestartet, das zur Konfiguration eines anderen Betriebsmittels dient. Das Konfigurationskennzeichen dient also dazu, verschiedene Konfigurationsverfahren bzw. verschiedene Betriebsmittel voneinander zu unterscheiden.

Bei einer anderen Weiterbildung des erfindungsgemäßen Verfahrens enthält ein Zugriff einen Lesevorgang und/oder einen Schreibvorgang von Daten. Beim Erzeugen von Daten wird beispielsweise ein Schreibvorgang ausgeführt. Beim Konfigurieren von bereits vorhandenen Daten wird zunächst eine Lesevorgang ausgeführt, um die gelesenen Daten auf einer Anzeigeeinheit darzustellen. Nach der Änderung der Daten werden die geänderten Daten geschrieben. Zur Kontrolle der Daten lässt sich beispielsweise nur ein Lesevorgang ausführen. Bei einer Ausgestaltung des erfindungsgemäßen Verfahrens enthält ein Zugriff eine Löschoperation. Das Löschen von Daten lässt sich beispielsweise durch Überschreiben mit anderen Daten durchführen oder auch schon durch das Entfernen von Verweisen, die zum Zugriff auf die Daten erforderlich sind.

Bei einer anderen Weiterbildung des erfindungsgemäßen Verfahrens wird das zentrale Verfahren mit Hilfe eines zentralen Programms ausgeführt. Das Konfigurationsverfahren wird mit Hilfe eines Konfigurationsprogramms ausgeführt.

Bei einer nächsten Weiterbildung werden das zentrale Verfahren und das Konfigurationsverfahren auf verschiedenen Rechnern eines Datenübertragungsnetzes ausgeführt. Insbesondere in Datenübertragungsnetzen ist es von besonderer Bedeutung, die Nutzerdaten eines Nutzers konsistent zu halten und kohärent ändern zu können. So werden in Datenübertragungsnetzen oft so genannte verteilte Systeme eingesetzt, in denen die Nutzerdaten für einen Nutzer auf mehreren Rechnern verteilt gespeichert werden.

Bei einer Weiterbildung des erfindungsgemäßen Verfahrens ist das Betriebsmittel ein Internettelefon, eine eMailbox oder eine Voicebox. Insbesondere bei diesen Anwendungen ist es zweckmäßig, jeweils eigene Konfigurationsverfahren auszuführen und dennoch die Nutzerdaten auch von einer zentralen Stelle aus zu verwalten.

Bei einer nächsten Weiterbildung des erfindungsgemäßen Verfahrens ist dem Betriebsmittel ein allgemeiner Datensatz zugeordnet, der nutzerunabhängige Eigenschaften des Betriebsmittels festlegt, beispielsweise eine generelle Angabe über die Art des Betriebsmittels, oder über die Darstellung des Betriebsmittels bei der Durchführung des zentralen Verfahrens, d.h. von Angaben, welche die Zuordnung von Betriebsmitteln zu bestimmten Nutzern erleichtern. Bei einer Ausgestaltung enthält dieser Datensatz auch das Konfigurationskennzeichen oder Teile des Konfigurationskennzeichens.

Bei einer nächsten Weiterbildung ist dem Nutzerkennzeichen ein Verweisdatensatz zugeordnet, der einen Verweis auf den allgemeinen Datensatz enthält. Zusätzlich oder alternativ enthält der Verweisdatensatz einen Verweis auf die Anwendungsdaten. Durch die Auslagerung bestimmter Daten in den Verweisdatensatz wird erreicht, dass eine Datei, in der alle Benutzer registriert sind, nur selten geändert werden muss, nämlich nur dann, wenn ein neuer Nutzer hinzugefügt wird oder ein Nutzer entfernt wird. Jedoch muss die Datei nicht geändert werden, wenn für einen bereits registrierten Nutzer ein Betriebsmittel hinzugefügt werden oder wenn einem Nutzer ein Betriebsmittel entzogen werden muss.

Bei einer nächsten Weiterbildung des erfindungsgemäßen Verfahrens enthalten die Anwendungsdaten nutzerabhängige Daten, beispielsweise diejenige Rufnummer des Nutzers, unter der er in einem durchschaltevermittelten Netz erreichbar ist, oder diejenige Internetadresse, unter der er im Internet erreichbar ist. Bei Ausgestaltungen enthalten die Anwendungsdaten auch Verweise auf das zentrale Verfahren, die die automatische Ausführung des zentralen Verfahrens im Anschluss an die lokale Konfiguration ermöglichen. Dieser Aufruf lässt sich auch so durchführen, dass eine Bedienperson zum Ausführen des Konfigurationsverfahrens den Aufruf nicht bemerkt.

Bei einer anderen Weiterbildung werden Standarddaten beim Festlegen des Nutzerkennzeichens und/oder beim Festlegen der Anwendungsdaten als Vorgabewerte genutzt. Solche Vorgabewerte werden auch als Templates bezeichnet und erleichtern die Eingabe von Daten erheblich.

Bei einer anderen Weiterbildung des erfindungsgemäßen Verfahrens werden die Nutzerdaten, d.h. insbesondere das Nutzerkennzeichen und/oder die Anwendungsdaten, in einer Datenbeschreibungssprache gespeichert. Datenbeschreibungssprachen bieten den Vorteil, dass sie von Rechnern und von Menschen gleichermaßen gut lesbar sind. Geeignete Sprachen sind beispielsweise die Sprachen HTML (Hypertext Markup Language) oder XML (Extensible Markup Language). Jedoch lassen sich auch andere Datenformate einsetzen, beispielsweise sogenannte Records oder Strukturen.

Bei einer nächsten Weiterbildung des erfindungsgemäßen Verfahrens werden die Verfahrensschritte beim Ausführen eines Java-Programms oder eines Verzeichnisdienstes erbracht. Beide Möglichkeiten sind insbesondere für Datenübertragungsnetze geeignet.

Bei einer nächsten Weiterbildung des erfindungsgemäßen Verfahrens ist das Konfigurationsverfahren Bestandteil des Anwendungsprogramms. Alternativ ist das Konfigurationsverfahren vom Anwendungsprogramm losgelöst, um das Konfigurationsverfahren besser an die Anforderungen eines Datenübertragungsnetzes anzupassen.

Die Erfindung betrifft außerdem ein Programm, bei dessen Ausführung durch einen Prozessor die auf das zentrale Verfahren bezogenen Verfahrensschritte und/oder die auf das dezentrale Verfahrenen bezogenen Verfahrensschritte des erfindungsgemäßen Verfahrens oder einer Weiterbildung ausgeführt werden. Auch ist durch die Erfindung eine Datenverarbeitungsanlage mit einem solchen Programm betroffen. Die Erfindung betrifft außerdem eine Datenstruktur, die ein Nutzerkennzeichen und ein dem Nutzerkennzeichen zugeordnetes Konfigurationskennzeichen enthält, mit dessen Hilfe ein Konfigurationsverfahren ausgeführt wird. Bei Weiterbildungen der Datenstruktur enthält diese Daten, auf die bei der Durchführung des erfindungsgemäßen Verfahrens bzw. einer Weiterbildung zugegriffen wird. Damit gelten für das Programm, für die Datenverarbeitungsanlage und für die Datenstruktur die oben genannten technischen Wirkungen ebenfalls.

Im Folgenden werden Ausführungsbeispiele der Erfindung an Hand der beiliegenden Zeichnungen erläutert. Darin zeigen:
- Figur 1: Nutzerdaten und Programme zum Zugriff auf die Nutzerdaten,
- Figur 2: die Beziehung zwischen Klassen von Datenstrukturen, welche von den Programmen genutzt werden,
- Figur 3: Verfahrensschritte zum Registrieren eines speziellen Konfigurationsverfahrens bei einem zentralen Verfahren,
- Figur 4: Verfahrensschritte beim Hinzufügen von Nutzerdaten ausgehend von dem zentralen Verfahren,
- Figur 5: Verfahrensschritte beim Hinzufügen von Nutzerdaten ausgehend von dem speziellen Konfigurationsverfahren,
- Figur 6: Verfahrensschritte beim Entfernen von Nutzerdaten ausgehend von dem zentralen Verfahren,
- Figur 7: Verfahrensschritte beim Entfernen von Nutzerdaten ausgehend von dem speziellen Konfigurationsverfahren,
- Figur 8: Verfahrensschritte beim Modifizieren von Nutzerdaten ausgehend von dem zentralen Verfahren, und
- Figur 9: Verfahrensschritte beim Modifizieren von Nutzerdaten ausgehend von dem speziellen Verfahren.

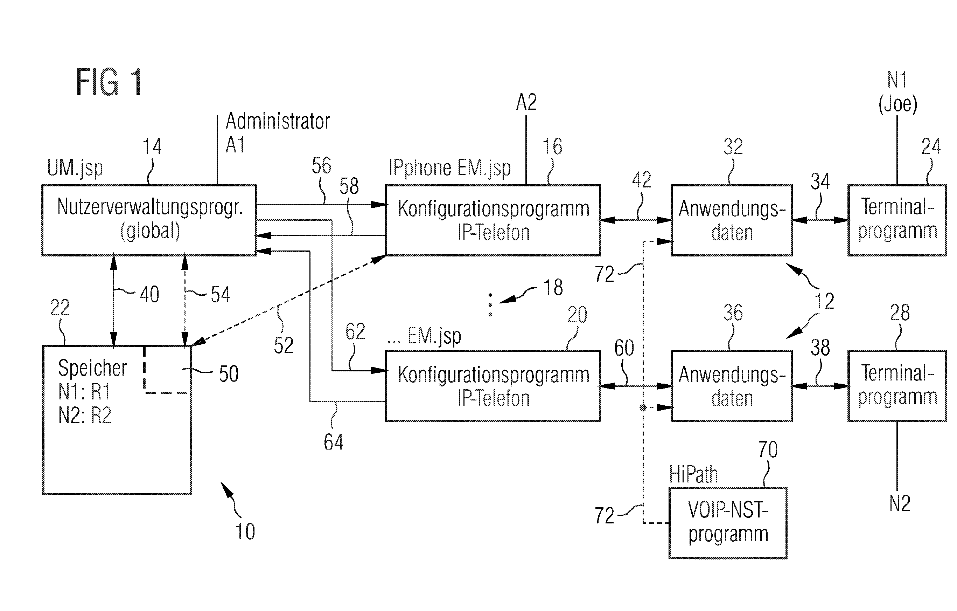

Figur 1 zeigt Nutzerdaten 10 und 12 sowie ein Nutzerverwaltungsprogramm 14 und Konfigurationsprogramme 16 bis 20, die zum Zugriff auf die Nutzerdaten 10 bzw. 12 dienen. Die Nutzerdaten 10 sind in einer Speichereinheit 22 gespeichert, beispielsweise in einer Datenbank. Die Speichereinheit 22 enthält zu verschiedenen Nutzern N1, N2 Betriebsmittelkennzeichen R1 und R2, die Betriebsmittel bezeichnen, die von den jeweiligen Nutzern genutzt werden. Die Funktionen des zum Betriebsmittelkennzeichen R1 gehörenden Betriebsmittel werden durch ein Terminalprogramm 24 erbracht. Das Terminalprogramm 24 wird durch einen Nutzer N1 genutzt. Es sei angenommen, dass der Nutzer N1 den Namen Joe hat.

Ein Betriebsmittelkennzeichen R2 bezeichnet ein Betriebsmittel, dessen Funktion durch ein Terminalprogramm 28 erbracht wird. Das Terminalprogramm 28 wird von einer Nutzerin N2 genutzt.

Somit enthalten die Nutzerdaten 10 für die jeweiligen Nutzer die folgenden Datensätze:
- N1: R1,
- N2: R2.

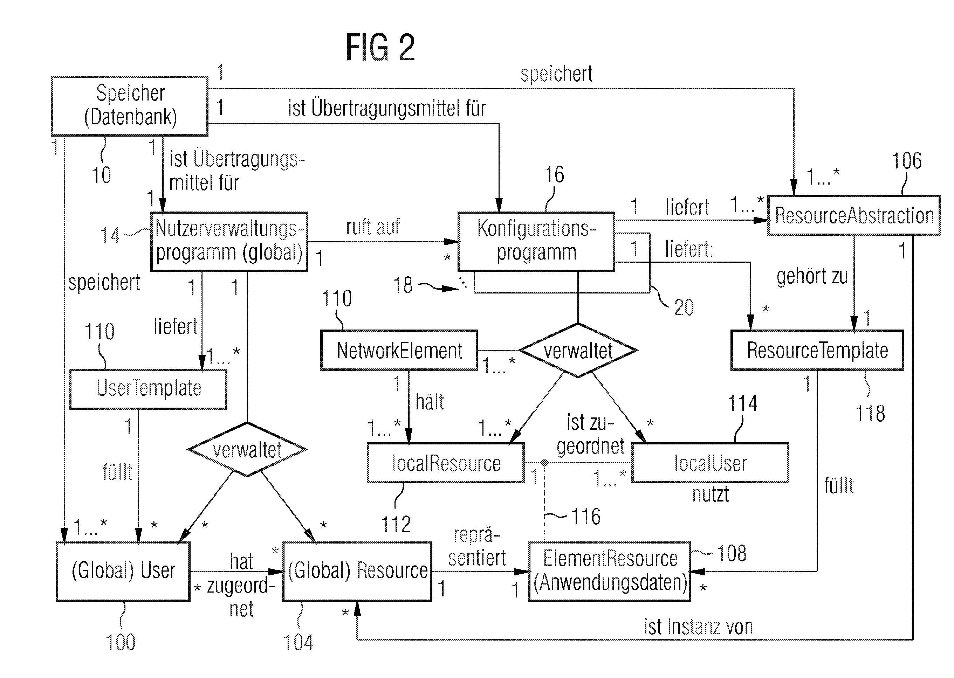

In den Nutzerdaten sind also allgemeine Zuordnungen von Betriebsmitteln R1 und R2 zu Nutzern N1, N2 vermerkt, ohne dass Details zu den Betriebsmitteln angegeben werden. Weitere in den Nutzerdaten 10 enthaltene Daten werden unten im Zusammenhang mit der Figur 2 erläutert.

Die Nutzerdaten 12 unterteilen sich in Anwendungsdaten 32 für das Terminalprogramm 24, siehe Pfeil 34, sowie in Anwendungsdaten 36 für das Terminalprogramm 28, siehe Pfeil 38. Die Anwendungsdaten 32 werden unten im Zusammenhang mit der Figur 2 näher erläutert. Die Anwendungsdaten 36 enthalten Angaben darüber, wie das IP-Telefon des Nutzers N2 zu konfigurieren ist.

Die Nutzerdaten 10 werden von dem Nutzerverwaltungsprogramm 14 verwaltet, siehe Pfeil 40. Die dabei durch das Nutzerverwaltungsprogramm 14 ausgeführten Verfahrensschritte werden unten im Zusammenhang mit den Figuren 2 bis 9 erläutert. Das Nutzerverwaltungsprogramm 14 wird im Ausführungsbeispiel mit Hilfe einer sogenannten Java-Server-Page (jsp) erbracht, die den Namen UM.jsp hat, wobei UM die Abkürzung für User Management ist. Das Nutzerverwaltungsprogramm 14 wird beispielsweise durch einen globalen Systemadministrator A1 bedient.

Das Konfigurationsprogramm 16 dient zum Konfigurieren von IP-Telefonen (Internetprotocol), welche den Nutzern N1, N2 bzw. weiteren Nutzern zugeordnet sind. Das Konfigurationsprogramm 16 dient zum Erzeugen und zum Löschen der Anwendungsdaten 32, siehe Pfeil 42. Die vom Konfigurationsprogramm 16 ausgeführten Verfahrensschritte werden unten im Zusammenhang mit den Figuren 2 bis 9 näher erläutert. Im Ausführungsbeispiel ist das Konfigurationsprogramm 16 mit Hilfe einer Java-Server-Page (jsp) realisiert, die den Namen IPphoneEM.jsp trägt, wobei EM eine Abkürzung für Elementmanager ist. Das Konfigurationsprogramm 16 wird beispielsweise durch einen Administrator A2 gestartet. Zwischen dem Nutzerverwaltungsprogramm 14 und dem Konfigurationsprogramm 16 lassen sich Daten über einen Teil 50 der Speichereinheit 22 austauschen, vgl. Pfeile 52 und 54. Das Nutzerverwaltungsprogramm 14 und das Konfigurationsprogramm 16 können sich wechselweise aufrufen, siehe Pfeile 56 und 58.

Das Konfigurationsprogramm 20 dient zum Verwalten der Anwendungsdaten 36, siehe Pfeil 60. Im Ausführungsbeispiel ist das Konfigurationsprogramm 20 ebenfalls mit Hilfe einer Java-Server-Page (jsp) realisiert. Beim Ausführen des Konfigurationsprogramms 20 werden bezüglich der Anwendungsdaten 36 ähnliche Verfahrensschritte ausgeführt wie beim Ausführen des Konfigurationsprogramms 16 bezüglich der Anwendungsdaten 32. Deshalb werden die beim Ausführen des Konfigurationsprogramms 20 durchgeführten Verfahrensschritte nicht näher erläutert. Zwischen dem Nutzerverwaltungsprogramm 14 und dem Konfigurationsprogramm 20 lassen sich ebenfalls Daten über den Teil 50 des Speichereinheit 10 austauschen. Außerdem können sich das Nutzerverwaltungsprogramm 14 und das Konfigurationsprogramm 20 wechselweise aufrufen, vgl. Pfeile 62 und 64.

Auf die Anwendungsdaten 32 bzw. 36 greift auch ein VoIP-Nebenstellenprogramm 70 zu, das für den Dienst VoIP (Voice over Internet Protocol) die Funktionen einer Nebenstellenanlage erbringt, beispielsweise eine Rufweiterleitung oder die Vermittlung von einer Zentrale zu den an die Nebenstellenanlage angeschlossenen IP-Telefonen. Die Nebenstellenanlage ist beispielsweise eine Anlage vom Typ HiPath 3000, wie sie von der Firma SIEMENS AG hergestellt wird. Der Zugriff durch das Nebenstellenprogramm 70 auf die Anwendungsdaten 32 bzw. 36 ist durch einen Pfeil 72 dargestellt.

Figur 2 zeigt die Beziehungen zwischen Klassen von Datenstrukturen, die von dem Nutzerverwaltungsprogramm 14 bzw. von dem Konfigurationsprogramm 16 zum Zugriff auf die Nutzerdaten 10 bzw. 12 genutzt werden. Die Darstellung der Klassen gemäß Figur 2 stimmt mit den Vorgaben einer sogenannten UML (Unified Modelling Language) überein, die von der OMG (Object Management Group) festgelegt worden ist, siehe z.B. unter der Internetadresse http://www.omg.org. Gemäß dieser Sprache werden die Klassen durch Rechtecke dargestellt. Beziehungen zwischen nur zwei Klassen werden durch Pfeile dargestellt. Für die Darstellung von Beziehungen, an denen mehr als zwei Klassen beteiligt sind, werden Rauten verwendet. Außerdem werden an den Enden der Pfeile Kennzeichen vermerkt, welche die Anzahl von Instanzen der jeweiligen Klasse angeben. So bezeichnet die Ziffer 1 eine einzige Instanz. Das Zeichen "*" bezeichnet beliebig viele Instanzen. Durch das Kennzeichen "1...*" wird angegeben, dass es mindestens eine Instanz geben muss. Die Kennzeichen befinden sich jeweils in unmittelbarer Nähe des Rechtecks für die Klasse, für die sie die Anzahl der Instanzen festlegen. Weiterhin werden durch den Pfeilen zugeordnete verbale Angaben die Beziehungen näher angegeben.

Eine User-Klasse 100 legt den Aufbau von Datenstrukturen für einer Nutzer aus zentraler Sicht fest. Beispielsweise enthalten Instanzen der User-Klasse jeweils den Namen des Nutzers, den Namen der Firma, in der der Nutzer beschäftigt ist, sowie einen Verweis auf eine Datei, in der die dem Nutzer zugeordneten Betriebsmittel angegeben sind.

Eine Instanz der User-Klasse 100 hat beispielsweise den folgenden Aufbau: 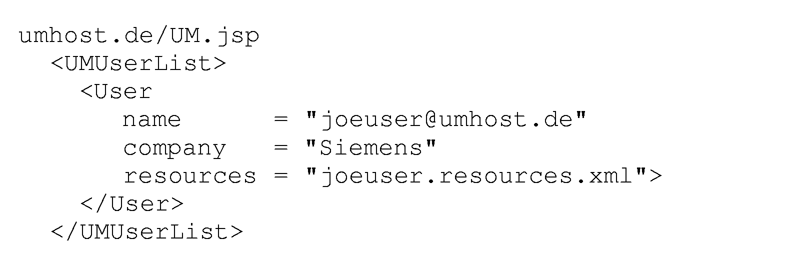 wobei "umhost.de" den Rechner bezeichnet, auf dem das Nutzerverwaltungsprogramm 14 ausgeführt wird. Die Bezeichnung "UM.jsp" ist, wie bereits erwähnt, der Name des Nutzerverwaltungsprogramms selbst. Eine Datenstruktur UMUserList enthält mehrere Instanzen der User-Klasse 100, wobei in dem obenstehenden Ausführungsbeispiel nur eine Instanz dargestellt ist, nämlich eine Instanz für den Nutzer N1. Als Name des Nutzers N1 ist dessen Internetadresse joeuser@umhost.de angegeben. Als Firma ist "Siemens" angegeben. Die Datei, in der die Betriebsmittel aufgelistet sind, hat im Ausführungsbeispiel den Namen "joeuser.resources.xml". Der Inhalt dieser Datei wird weiter unten näher erläutert.

Eine UserTemplate-Klasse 102 legt den Aufbau von Datenstrukturen fest, mit deren Hilfe Vorgabewerte für Instanzen der User-Klasse 100 vorgegeben werden. Beispielsweise hat eine Instanz der UserTemplate-Klasse 102 den folgenden Aufbau: 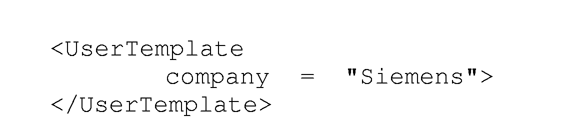 wobei als Vorgabe für das Datenfeld zur Bezeichnung der Firma "Siemens" vorgegeben ist. Andere Instanzen der UserTemplate-Klasse 102 legen andere Firmen oder auch andere Vorgabewerte fest. Die zu nutzende Instanz wird jeweils beim Einrichten der Daten eines Nutzers manuell ausgewählt. Die Instanz der UserTemplate-Klasse 102 ist ebenfalls auf dem Rechner mit der Adresse "umhost.de" gespeichert.

Eine Resource-Klasse 104 legt den Aufbau von Verweisdatensätzen fest, die beispielsweise einen Verweis auf eine allgemeine Beschreibung eines Betriebsmittels sowie einen Verweis auf eine Datei mit den Anwendungsdaten enthält. Beispielsweise hat ein Verweisdatensatz den folgenden Aufbau: 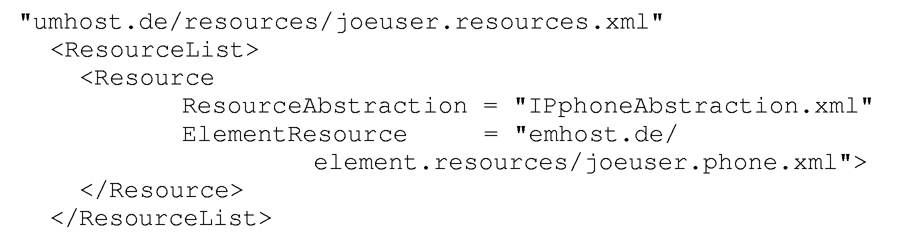 wobei "umhost.de/resources/joeuser.resources.xml" den Speicherort und den Namen der im Zusammenhang mit der User-Klasse 100 erwähnten Datei zur Auflistung der Betriebsmittel angibt. Eine Datenstruktur "ResourceList" enthält mehrere Resource-Datenstrukturen, wobei im Ausführungsbeispiel eine Resource-Datenstruktur dargestellt ist. Jede Instanz der Resource-Klasse enthält jeweils ein Datenfeld "ResourceAbstraction", das im Ausführungsbeispiel auf einen Dateinamen "IPphoneAbstraction.xml" verweist, und ein Datenfeld "ElementResource", das auf die Anwendungsdaten verweist. Im Ausführungsbeispiel sind die Anwendungsdaten unter "emhost.de/element.resources/joeuser.phone.xml" gespeichert, d.h. auf einem Rechner mit der Adresse EMhost.de in einem Verzeichnis "element.resources". Der Rechner mit der Adresse "EMhost.de" ist derselbe Rechner, auf dem das Konfigurationsprogramm 16 ausgeführt wird. Der Inhalt beider Dateien wird unten näher erläutert. Die Datei zum Speichern der Anwendungsdaten hat den Namen "joeuser.phone.xml", wobei der Bestandteil "joeuser" mit einem Teil des Nutzerkennzeichens übereinstimmt. Der Bestandteil "phone" entspricht dem Betriebsmittelkennzeichen R1.

Eine ResourceAbstraction-Klasse 106 legt den Aufbau von Datenstrukturen fest, welche die Betriebsmittel allgemein beschreiben. Ein Ausführungsbeispiel für eine Instanz der RessourceAbstraction-Klasse 106 hat den folgenden Inhalt: 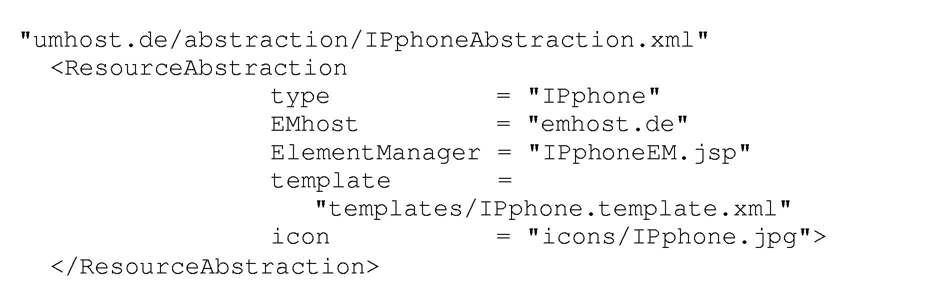 wobei "umhost.de/abstraction/IPphoneAbstraction.xml" den Namen und den Speicherort der Datei "IPphoneAbstraction.xml" bezeichnet, d.h. der Datei, in der die allgemeinen Angaben zum Betriebsmittel enthalten sind. Die im Ausführungsbeispiel dargestellte Instanz der ResourceAbstraction-Klasse 106 enthält folgende Datenfelder:
- ein Typfeld "type" zur Angabe der Art des Betriebsmittels, beispielsweise ein IP-Telefon,
- ein sogenanntes Host-Kennzeichen "Emhost" zur Angabe des Rechners, auf dem das Konfigurationsprogramm 16 ausgeführt wird, z.B. der Rechner mit der Adresse "EMhost.de",
- ein Datenfeld "Elementmanager", das den Namen des Konfigurationsprogramms 16 angibt, z.B. IPphoneEM.jsp,
- ein Datenfeld "Template", das einen Verweis auf eine Datenstruktur angibt, in der Vorgabewerte für die Anwendungsdaten gespeichert sind, z.B. "Template/IPphone. template.xml", deren Inhalt unten näher erläutert wird, und
- ein Datenfeld "Icon" zur Angabe einer Bilddatei, deren Daten zur Darstellung des Betriebsmittels auf einer Bedienoberfläche des Nutzerverwaltungsprogramms 14 dient, z.B. die Bilddatei "icon/IPphone.jpg".

Die in der Aufzählung erwähnten Datenfelder "EMhost" und "Elementmanager" bilden ein Konfigurationskennzeichen, mit dessen Hilfe sich das Konfigurationsprogramm 16 vom Nutzerverwaltungsprogramm 14 aus aufrufen lässt.

Die in der Instanz der ResourceAbstraction-Klasse 106 enthaltenen Datenwerte wurden vom Konfigurationsprogramm 16 an das Nutzerverwaltungsprogramm 14 mit Hilfe des Teils 50 der Speichereinheit 22 übermittelt.

Eine ElementResource-Klasse 108 legt den Aufbau der Anwendungsdaten fest. Beispielsweise haben die für den Nutzer N1 erzeugten Anwendungsdaten die folgenden Datenfelder: 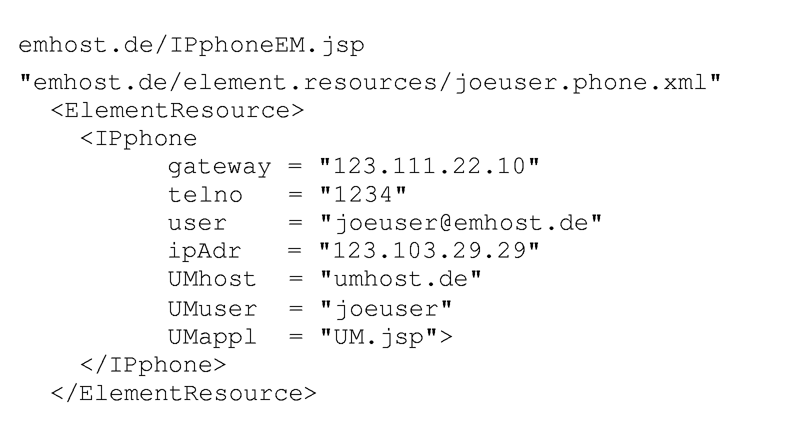 wobei die Anwendungsdaten in der oben bereits erwähnten Datei "emhost.de/element.ressources/joeuser.phone.xml" gespeichert sind. Die Anwendungsdaten betreffen ein IP-Telefon, das durch die Inhalte der Datenfelder einer Datenstruktur "IPphone" konfigurierbar ist.

Die Datenstruktur "IPphone" enthält die folgenden Datenfelder:
- ein Datenfeld "Gateway" zur Angabe der Internetadresse, über die das Internettelefon des Nutzers N1 Zugang zum Internet hat, im Ausführungsbeispiel die Adresse "123.111.22.10", die mit Hilfe eines Vorgabedatensatzes festgelegt wird, der weiter unten näher erläutert ist,
- ein Datenfeld "telno" zur Angabe einer Telefonnummer, unter der der Nutzer N1 im Telefonnetz erreichbar ist, z.B. die Nummer "1234",
- ein Datenfeld "user" zur Angabe eines lokalen Kennzeichens für den Nutzer N1, z.B. das Kennzeichen joeuser@emhost.de, das mit dem globalen Nutzerkennzeichen für den Nutzer N1 übereinstimmt,
- ein Datenfeld "ipAdr" zur Angabe der Internetadresse, unter der der Nutzer N1 telefonisch erreichbar ist, z.B. die Internetadresse "123.103.29.29",
- ein Datenfeld "UMhost" zur Angabe des Rechners, auf dem das Nutzerverwaltungsprogramm 14 ausgeführt wird, im Ausführungsbeispiel der Rechner mit der Adresse "umhost.de",
- ein Datenfeld "UMuser" zur Angabe des zentralen bzw. globalen Namens für den Nutzer N1, beispielsweise der Name "joeuser", der im Ausführungsbeispiel mit dem speziellen bzw. lokalen Namen übereinstimmt, und
- ein Datenfeld "UMAppl" zur Angabe des Programmnamens des Nutzerverwaltungsprogramms 14, beispielsweise der Name "UM.jsp".

Eine NetworkElement-Klasse 110 legt den Aufbau von Datenstrukturen fest, die jeweils ein Element des Betriebsmittels Netzwerk beschreiben, z.B. eine Nebenstellenanlage. Eine in der Datei "joeuser.phone.xml" enthaltene Instanz der NetworkElement-Klasse 110 hat beispielsweise den folgenden Aufbau: 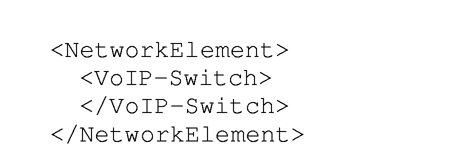 wobei VoIP-Switch ein Platzhalter für eine Vielzahl von Daten zur Beschreibung und Konfiguration des Nebenstellenprogramms 70 ist.

Eine localResource-Klasse 112 legt den Aufbau von Datenstrukturen zur Beschreibung der lokal genutzten Ressourcen bzw. Betriebsmitteln fest. Im Ausführungsbeispiel enthält die Instanz der localResource-Klasse 112 für den Nutzer N1 das folgende Datum: 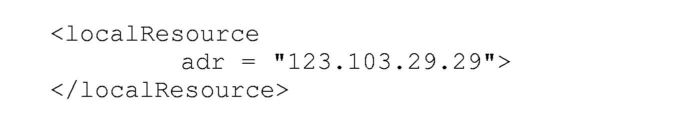 wobei die Zahlenfolge "123.103.29.29" die Internetadresse des lokalen Betriebsmittels ist, das durch den Nutzer N1 genutzt wird.

Eine localUser-Klasse 114 legt den Aufbau von Datenstrukturen zur Beschreibung der Nutzer fest. Für den Nutzer N1 gilt: 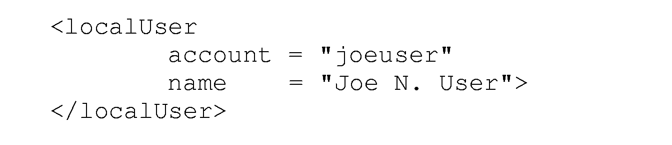 wobei ein Datenfeld "account" das lokale Benutzerkennzeichen angibt, z.B. "joeuser", und ein Datenfeld "Name" den bürgerlichen Namen des Nutzers angibt, beispielsweise Joe N. User.

Die Instanzen der NetworkElement-Klasse 110, der localResource-Klasse 112 und der localUser-Klasse 114 sind auf dem Rechner mit der Adresse "emhost.de" gespeichert, vorzugsweise in der Datei "IPphoneEM.jsp".

Eine gestrichelte Linie 116 verdeutlicht diesen Zusammenhang insbesondere für die Anwendungsdaten in der Instanz der ElementResource-Klasse 108 und die Instanz der Datenstruktur localResource-Klasse 112.

Eine ResourceTemplate-Klasse 118 legt den Aufbau von Datenstrukturen zur Vorgabe von Vorgabewerten für die Anwendungsdaten fest. Im Ausführungsbeispiel enthält eine Instanz der ResourceTemplate-Klasse 118 die folgenden Daten: 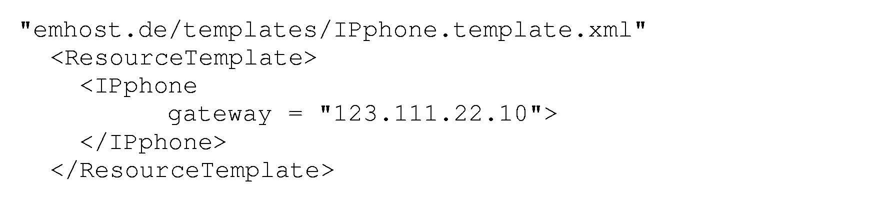 wobei "emhost.de/template/IPphone.template.xml" den Speicherort der Instanz bezeichnen. Das Template gibt im Ausführungsbeispiel nur die Internetadresse des Internetzugangs vor, über welchen der Nutzer N1 Zugang zum Internet hat.

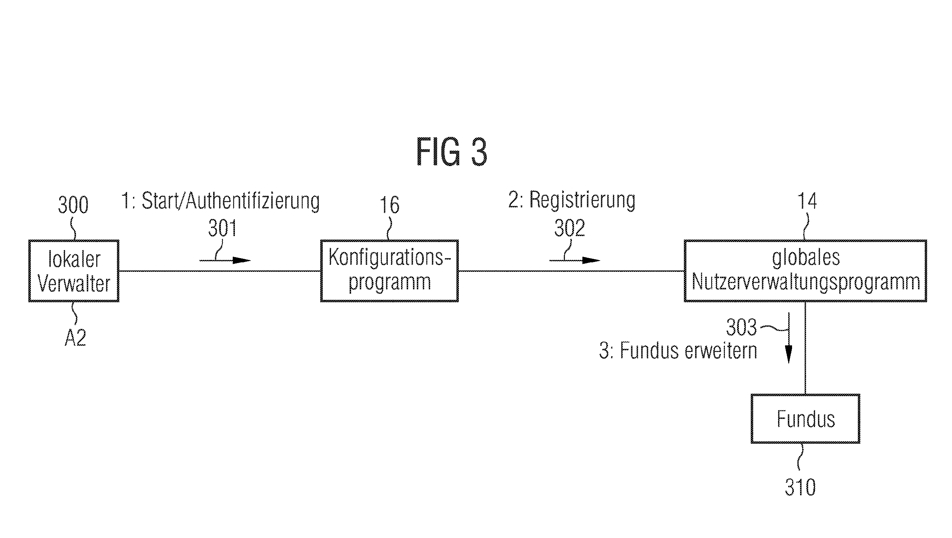

Figur 3 zeigt Verfahrensschritte zum Registrieren des Konfigurationsprogramms 16 beim Nutzerverwaltungsprogramm 14. Die an Hand der Figuren 3 bis 9 dargestellten Verfahrensschritte werden wiederum mit Hilfe der Sprache UML in den Figuren dargestellt.

In einem Verfahrensschritt 301 startet der lokale Administrator A2 das Konfigurationsprogramm 16 und identifiziert sich im Rahmen eines Authentifizierungsvefahrens durch die Eingabe eines Passwortes. In einem Verfahrensschritt 302 wird durch den Administrator A2 die Registrierung des Konfigurationsprogramms 16 beim Nutzerverwaltungsprogramm 14 veranlasst. Dabei werden die Daten für die zum Konfigurationsprogramm gehörende Instanz der Klasse ResourceAbstraction-Klasse 106 übermittelt.

In einem Verfahrensschritt 303 speichert das Nutzerverwaltungsprogramm 14 die übermittelten Daten in einem Fundus 310, der beispielsweise ebenfalls in der Speichereinheit 10 enthalten ist.

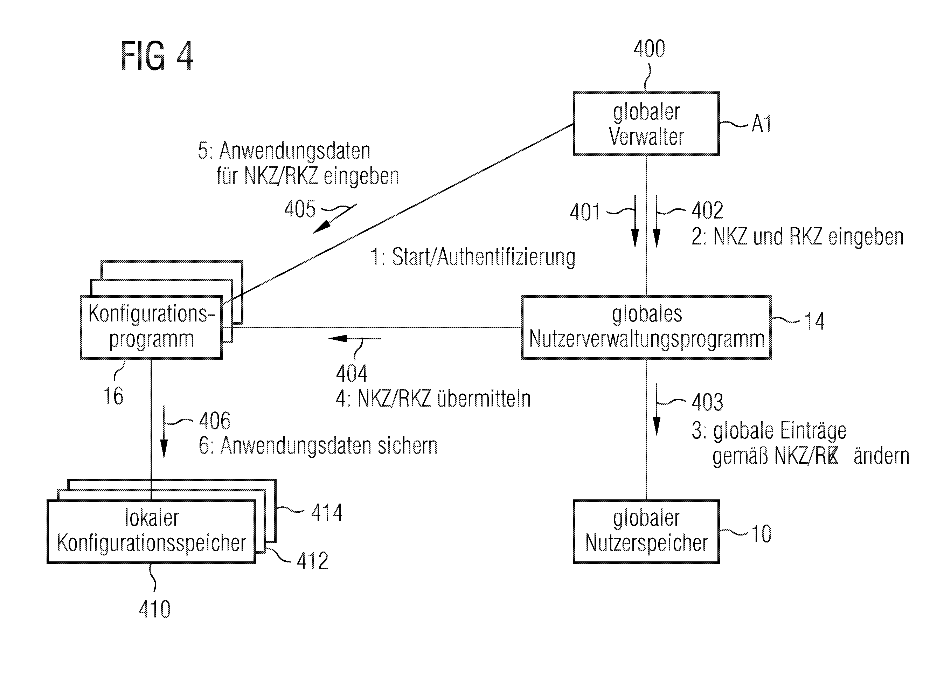

Figur 4 zeigt Verfahrensschritte beim Hinzufügen von Nutzerdaten ausgehend von dem mit Hilfe des Nutzerverwaltungsprogramms 14 ausgeführten zentralen Verfahrens.

In einem Verfahrensschritt 401 startet der Administrator A1 das Nutzerverwaltungsprogramm 14 und identifiziert sich im Rahmen eines Authentifizierungsvefahrens mit Hilfe eines Passwortes. In einem Verfahrensschritt 402 gibt der Administrator A1 ein Nutzerkennzeichen NKZ, z.B. das Nutzerkennzeichen des Nutzers N1, und ein Betriebsmittelkennzeichen RKZ ein, z.B. das Betriebsmittelkennzeichen R1.

In einem folgenden Verfahrensschritt 403 werden die eingegebenen Daten NKZ und RKZ in der Speichereinheit 22 gespeichert. Im Ausführungsbeispiel wird für den Nutzer N1 das Betriebsmittel R1 in den Nutzerdaten 10 vermerkt, siehe auch Figur 1.

In einem nächsten Verfahrensschritt 404 übermittelt das Nutzerverwaltungsprogramm 14 das Nutzerkennzeichen NKZ und das Betriebsmittelkennzeichen RKZ an das Konfigurationsprogramm 16.

Anschließend gibt der Administrator A1 die Anwendungsdaten für den durch das Nutzerkennzeichen NKZ bezeichneten Nutzer, z.B. für den Nutzer N1, und für das durch das Betriebsmittelkennzeichen RKZ bezeichnete Betriebsmittel ein, z.B. für das Betriebsmittel R1. Der Administrator A1 gibt die Daten mit Hilfe des Konfigurationsprogramms 16 ein, auf das er über ein Datenübertragungsnetz Zugriff hat. Das Nutzerverwaltungsprogramm 14 wertet dazu das Datenfeld "ElementManager" der ResourceAbstraction-Datenstruktur aus, um die Java-Server-Page zu ermitteln, über die das Konfigurationsprogramm 16 aufgerufen werden kann. Außerdem wird das Datenfeld "EMhost" ausgewertet, um die Adresse des Rechners zu ermitteln, auf dem das Konfigurationsprogramm 16 gespeichert ist.

In einem Verfahrensschritt 406 speichert das Konfigurationsprogramm 16 die vom Administrator A1 eingegebenen Anwendungsdaten in einen lokalen Konfigurationsspeicher 410, siehe Anwendungsdaten 32 in Figur 1. Für andere Konfigurationsprogramme 18, 20 gibt es weitere lokale Konfigurationsspeicher 412 und 414.

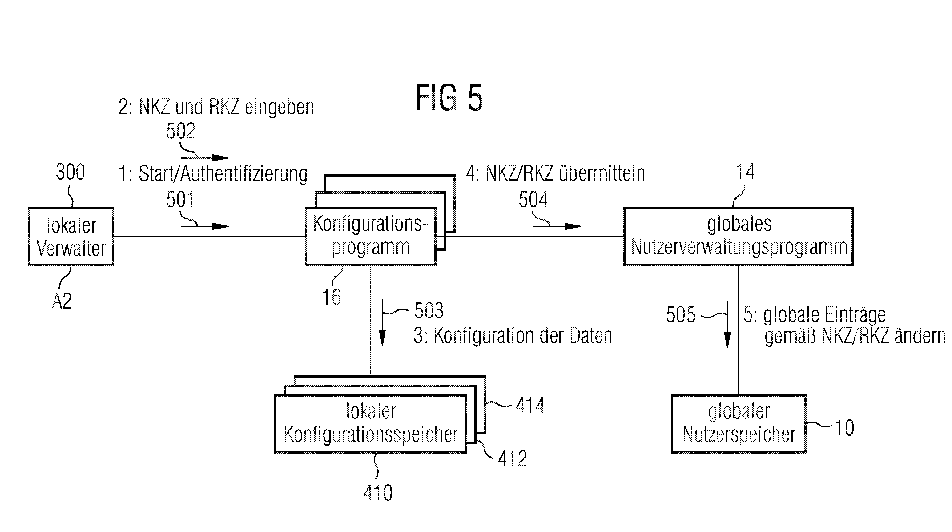

Figur 5 zeigt Verfahrensschritte beim Hinzufügen von Nutzerdaten ausgehend von dem Konfigurationsprogramm 16. In einem Verfahrensschritt 501 startet der Administrator A2 das Konfigurationsprogramm 16 und identifiziert sich im Rahmen eines Authentifizierungsvefahrens bzw. im Rahmen einer Authentisierung mit Hilfe eines Passwortes. Es sei angenommen, dass das Passwort korrekt ist.

In einem folgenden Verfahrensschritt 502 gibt der Administrator A2 ein Nutzerkennzeichen NKZ für einen Nutzer ein, dem er ein Betriebsmittel zuordnen möchte. Außerdem gibt der Administrator A2 im Verfahrensschritt 502 ein Betriebsmittelkennzeichen RKZ ein, welches das Betriebsmittel bezeichnet, das dem Nutzer zugeordnet werden soll.

In einem Verfahrensschritt 503 konfiguriert der Administrator A2 mit Hilfe des Konfigurationsprogramms 16 die Anwendungsdaten. Die Anwendungsdaten werden in dem lokalen Konfigurationsspeicher 410 gespeichert.

In einem folgenden Verfahrensschritt 504 vermittelt das Konfigurationsprogramm 16 automatisch das Nutzerkennzeichen NKZ und das Betriebsmittelkennzeichen RKZ an das Nutzerverwaltungsprogramm 14 über das Datenübertragungsnetz.

Nach dem Empfang des Nutzerkennzeichens NKZ und des Betriebsmittelkennzeichens RKZ speichert das Nutzerverwaltungsprogramm 14 die empfangenen Daten in der Speichereinheit 22 als Nutzerdaten 10 ab, wobei auch die Instanz der ResourceAbstraction-Klasse 160 für das Konfigurationsprogramm 16 genutzt wird.

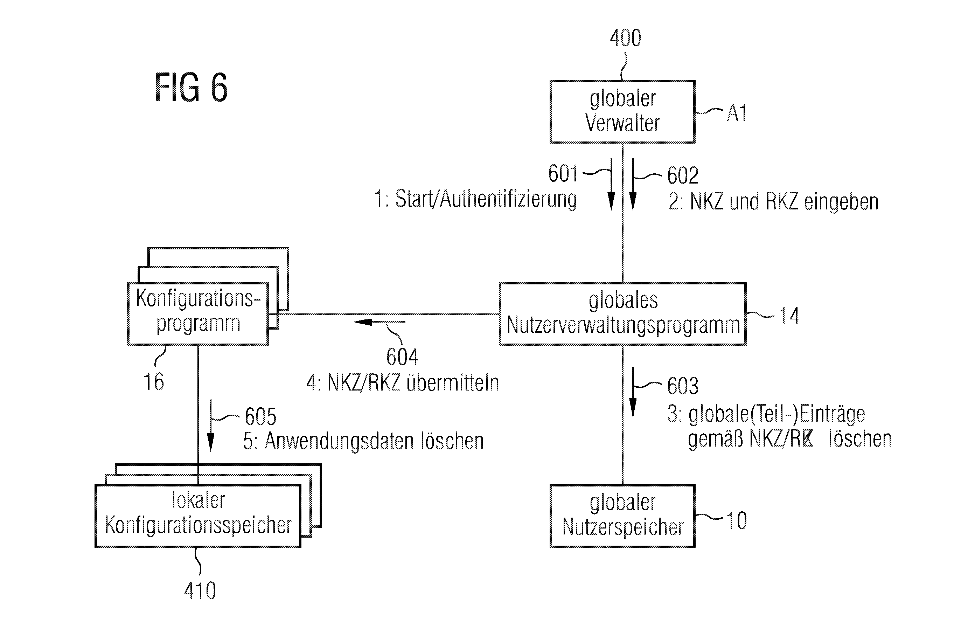

Figur 6 zeigt Verfahrensschritte beim Entfernen von Nutzerdaten ausgehend von dem zentralen Verfahren. Der Administrator A1 startet in einem Verfahrensschritt 601 das Nutzerverwaltungsprogramm 14. Er gibt sein Passwort ein und wird authentifiziert.

In einem Verfahrensschritt 602 gibt der Administrator A1 mit Hilfe des Nutzerverwaltungsprogramms 14 ein Nutzerkennzeichen NKZ und ein Betriebsmittelkennzeichen RKZ ein, welche den Nutzer, dessen Betriebsmittel gelöscht werden soll, und das Betriebsmittel selbst bezeichnen.

In einem Verfahrensschritt 603 veranlasst das Nutzerverwaltungsprogramm 14, dass das dem Nutzer mit dem Nutzerkennzeichen NKZ zugeordnete Betriebsmittel mit dem Betriebsmittelkennzeichen RKZ in den Nutzerdaten 10 gelöscht wird. Dazu wird ein Zugriff auf die Speichereinheit 22 durch das Nutzerverwaltungsprogramm 14 ausgeführt.

In einem folgenden Verfahrensschritt 604 übermittelt das Nutzerverwaltungsprogramm 14 das im Verfahrensschritt 602 eingegebene Nutzerkennzeichen NKZ und das ebenfalls im Verfahrensschritt 602 eingegebene Betriebsmittelkennzeichen RKZ automatisch über das Datenübertragungsnetz zum Konfigurationsprogramm 16. Zum Aufruf des Konfigurationsprogramms 16 werden die oben erläuterten Adressdaten genutzt.

In einem Verfahrensschritt 605 empfängt das Konfigurationsprogramm 16 das Nutzerkennzeichen NKZ sowie das Betriebsmittelkennzeichen RKZ und löscht gemäß diesen Vorgaben Einträge in den Anwendungsdaten. Die Daten werden in dem lokalen Konfigurationsspeicher 410 gelöscht.

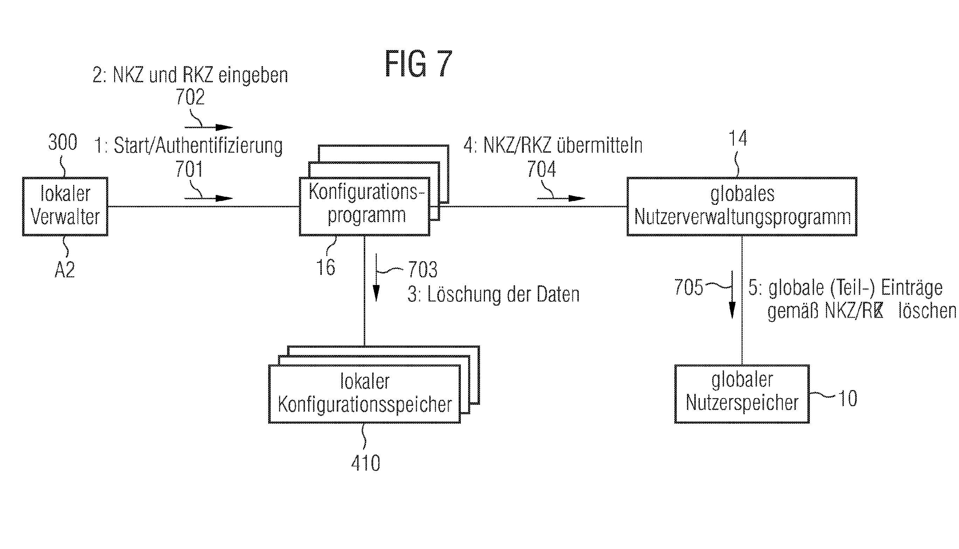

Figur 7 zeigt Verfahrensschritte beim Entfernen von Nutzerdaten ausgehend vom Konfigurationsprogramm 16. Der Administrator A2 startet in einem Verfahrensschritt 701 das Konfigurationsprogramm 16 und identifiziert sich bei der Durchführung eines Authentifizierungsverfahrens.

In einem Verfahrensschritt 702 gibt der Administrator A2 mit Hilfe des Konfigurationsprogramms 16 ein Nutzerkennzeichen NKZ für einen Nutzer ein, für den ein zugeordnetes Betriebsmittel entfernt werden soll. Im Verfahrensschritt 702 wird außerdem mit Hilfe eines einzugebenden Betriebsmittelkennzeichens RKZ das Betriebsmittel bezeichnet, das für den Nutzer nicht mehr zur Verfügung stehen soll.

In einem Verfahrensschritt 703 veranlasst das Konfigurationsprogramm 16 das Löschen der Zuordnung des Betriebsmittels mit dem Betriebsmittelkennzeichen RKZ, das zu dem Nutzer mit dem im Verfahrensschritt 702 eingegebenen Nutzerkennzeichen NKZ gehört. Die Zuordnung wird im lokalen Konfigurationsspeicher 410 gelöscht.

In einem folgenden Verfahrensschritt 704 übermittelt das Konfigurationsprogramm 16 automatisch das im Verfahrensschritt 702 eingegebene Nutzerkennzeichen NKZ und das ebenfalls im Verfahrensschritt 702 eingegebene Betriebsmittelkennzeichen RKZ an das Nutzerverwaltungsprogramm 14. Das Nutzerkennzeichen NKZ und das Betriebsmittelkennzeichen RKZ werden über das Datenübertragungsnetz übertragen. Das Konfigurationsprogramm 16 ermittelt die Adresse des Nutzerverwaltungsprogramms 14 mit Hilfe der oben erläuterten Anwendungsdaten.

Nach dem Empfang des Nutzerkennzeichens NKZ und des Betriebsmittelkennzeichens RKZ löscht das Nutzerverwaltungsprogramm 14 in einem Verfahrensschritt 705 die Zuordnung des Betriebsmittelkennzeichens RKZ zu dem durch das Nutzerkennzeichen NKZ bezeichneten Nutzer in der Speichereinheit 22.

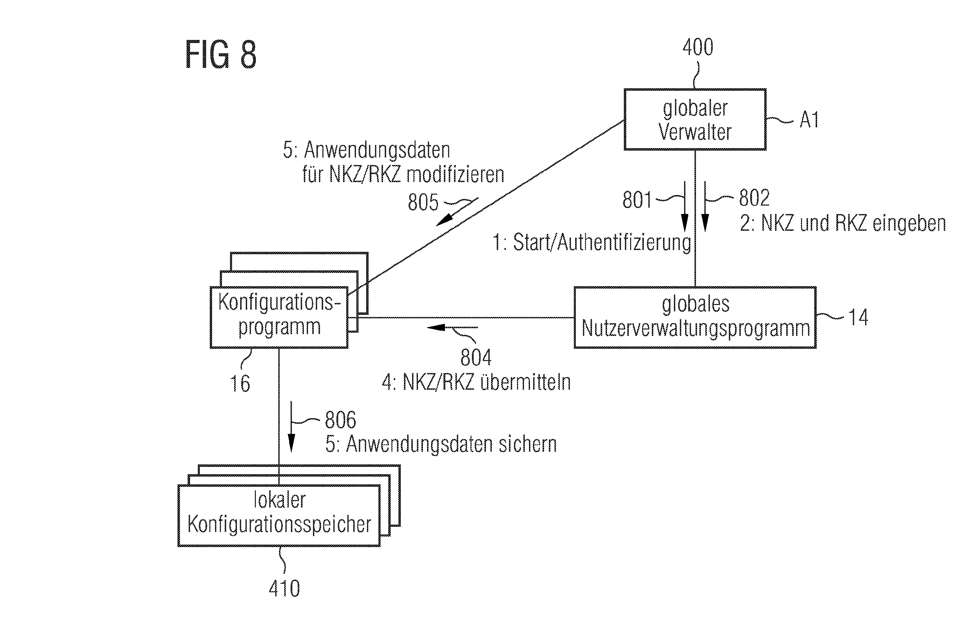

Figur 8 zeigt Verfahrensschritte beim Modifizieren von Einträgen ausgehend von dem zentralen Verfahren. In einem Verfahrensschritt 801 startet der Administrator A1 das Nutzerverwaltungsprogramm 14 und identifiziert sich mit Hilfe eines Passwortes. Es sei angenommen, dass das Passwort korrekt ist.

In einem folgenden Verfahrensschritt 802 gibt der Administrator A1 mit Hilfe des Nutzerverwaltungsprogramms 14 ein Nutzerkennzeichen NKZ und ein Betriebsmittelkennzeichen RKZ ein, so dass ein Nutzer bezeichnet ist, für den ein bereits zugeordnetes Betriebsmittel neu konfiguriert werden soll.

Im Falle einer Modifikation bereits vorhandener Einträge müssen in der Speichereinheit 22 keine Nutzdaten geändert werden. Somit wird vom Nutzerverwaltungsprogramm 14 auch kein Zugriff auf die Speichereinheit 22 durchgeführt.

In einem folgenden Verfahrensschritt 804 übermittelt das Nutzerverwaltungsprogramm 14 an das Konfigurationsprogramm 16 über das Datenübertragungsnetz das im Verfahrensschritt 802 eingegebene Nutzerkennzeichen NKZ und das ebenfalls im Verfahrensschritt 802 eingegebene Betriebsmittelkennzeichen RKZ.

Das Konfigurationsprogramm 16 wird automatisch gestartet und über das Datenübertragungsnetz wird eine Verbindung zwischen dem Administrator A1 und dem Konfigurationsprogramm 16 aufgebaut. Die bereits für den Nutzer und das Betriebsmittel im Konfigurationsspeicher 410 gespeicherten Anwendungsdaten werden gelesen und an den Administrator A1 über das Datenübertragungsnetz übermittelt. Über die Verbindung modifiziert der Administrator A1 außerdem in einem Verfahrensschritt 805 die Anwendungsdaten für das im Verfahrensschritt 802 bezeichnete Betriebsmittel RKZ, das dem im Verfahrensschritt 802 bezeichneten Nutzer NKZ gehört.

In einem nächsten Verfahrensschritt 806 speichert das Konfigurationsprogramm 16 die geänderten Anwendungsdaten im lokalen Konfigurationsspeicher 410 ab.

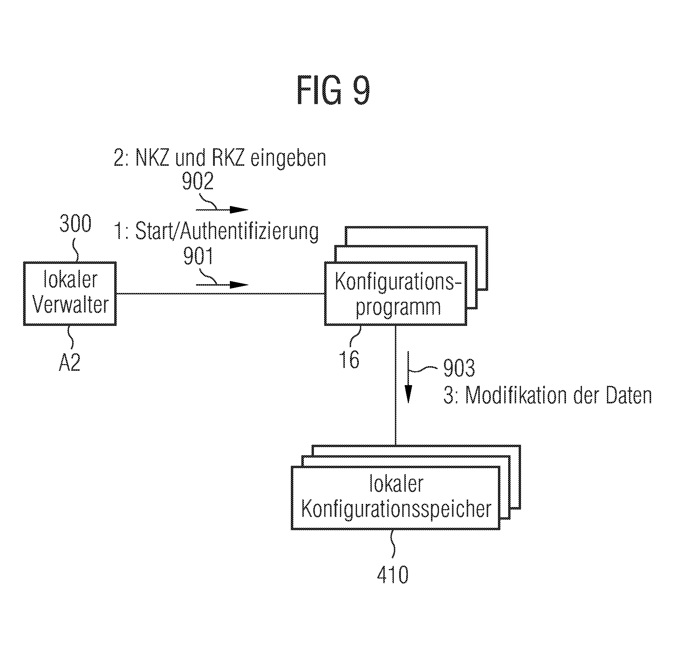

Figur 9 zeigt Verfahrensschritte beim Modifizieren von Einträgen ausgehend vom Konfigurationsprogramm 16. In einem Verfahrensschritt 901 startet der Administrator A2 das Konfigurationsprogramm 16. Außerdem wird automatisch eine Authentifizierung des Administrators A2 durchgeführt, beispielsweise mit Hilfe eines Passwortes.

In einem folgenden Verfahrensschritt 902 gibt der Administrator A2 mit Hilfe des Konfigurationsprogramms 16 ein Nutzerkennzeichen NKZ für einen Nutzer ein, dessen Anwendungsdaten geändert werden sollen. Außerdem gibt der Administrator A1 im Verfahrensschritt 902 ein Betriebsmittelkennzeichen RKZ ein, das ein Betriebsmittel des Nutzers mit dem Nutzerkennzeichen NKZ bezeichnet.

In einem Verfahrensschritt 903 werden die zu ändernden Anwendungsdaten vom Konfigurationsprogramm 16 aus dem Konfigurationsspeicher 410 gelesen und ausgegeben bzw. angezeigt. Der Administrator A2 modifiziert die zu dem Betriebsmittel gehörenden Anwendungsdaten mit Hilfe des Konfigurationsprogramms 16. Die geänderten Anwendungsdaten werden ebenfalls im Verfahrensschritt 903 mit Hilfe des Konfigurationsprogramms im lokalen Konfigurationsspeicher 410 gespeichert.

Werden bereits vorhandene Einträge nur geändert, so muss das Nutzerverwaltungsprogramm 14 nicht von der Änderung informiert werden, da die in der Speichereinheit 22 gespeicherten Nutzerdaten unverändert bleiben können.

Bei einem anderen Ausführungsbeispiel wird ein Betriebsmittel mehreren Nutzern zugeordnet. So lässt sich das Terminalprogramm 24 beispielsweise vormittags dem Nutzer N1 und nachmittags einem Nutzer N3 zuordnen. Die zeitliche Zuordnung des Betriebsmittels zu einem Nutzer wird in den Anwendungsdaten vermerkt. Ansonsten bleiben die an Hand der Figuren 1 bis 9 erläuterten Verfahrensschritte zum Zugriff auf die Nutzerdaten 10 bzw. 12 unverändert. Dies wird durch die an Hand der Figur 2 vorgegebenen Klassen ermöglicht.

## Patentansprüche

1. Verfahren zum Zugriff auf Nutzerdaten (10, 12),
bei dem mit Hilfe eines zentralen Verfahrens (14) auf ein Nutzerkennzeichen (N1) zugegriffen wird, das einen Nutzer (N1) bezeichnet,
bei dem der Nutzer ein Betriebsmittel nutzt oder nutzen möchte, dessen Funktion durch ein Anwendungsprogramm (24) erbracht wird,
bei dem mit Hilfe des zentralen Verfahrens (14) zu dem Nutzerkennzeichen (N1) ein Konfigurationskennzeichen (R1) gespeichert wird, mit dessen Hilfe ein Konfigurationsverfahren (16) ausgeführt werden kann,
bei dem mit Hilfe des Konfigurationsverfahrens (16) auf Anwendungsdaten (32) zugegriffen wird, welche das Anwendungsprogramm (24) bei der Nutzung des Betriebsmittels durch den Nutzer (N1) liest oder gelesen hat,
und bei dem wahlweise eine zentrale Zugriffsart oder eine dezentrale Zugriffsart ausgeführt wird,
wobei in der zentralen Zugriffsart das Konfigurationsverfahren (16) beim Ausführen des zentralen Verfahrens (14) unter Verwendung des Konfigurationskennzeichens (R1) ausgeführt wird,
und wobei in der dezentralen Zugriffsart beim Ausführen des Konfigurationsverfahrens (16) ein Nutzerkennzeichen (N1) und/oder ein Betriebsmittelkennzeichen (RKZ) zur Bezeichnung eines Betriebsmittels an eine Einheit zum Ausführen des zentralen Verfahrens (14) übermittelt und durch diese Einheit bearbeitet werden.

2. Verfahren nach Anspruch 1, **dadurch gekennzeichnet, dass** mit Hilfe des zentralen Verfahrens mindestens ein weiteres Konfigurationskennzeichen (R2) zu dem Nutzerkennzeichen (N1) und/oder zu einem anderen Nutzerkennzeichen (N2) vermerkt wird,
und dass mit Hilfe des weiteren Konfigurationskennzeichens (R1) ein weiteres Konfigurationsverfahrens (20) gestartet werden kann, das zum Konfigurieren eines anderen Betriebsmittels (R2) dient.

3. Verfahren nach Anspruch 1 oder 2, **dadurch gekennzeichnet, dass** der Zugriff einen Lesevorgang und/oder einen Schreibvorgang enthält,
oder dass der Zugriff eine Löschoperation enthält.

4. Verfahren nach einem der vorhergehenden Ansprüche, **dadurch gekennzeichnet, dass** das zentrale Verfahren mit Hilfe eines zentralen Programms (14) ausgeführt wird,
und dass das Konfigurationsverfahren mit Hilfe eines Konfigurationsprogramms (16) ausgeführt wird.

5. Verfahren nach Anspruch 4, **dadurch gekennzeichnet, dass** das zentrale Verfahren (14) und das Konfigurationsverfahren (16) auf verschiedenen Rechnern eines Datenübertragungsnetzes ausgeführt werden.

6. Verfahren nach einem der vorhergehenden Ansprüche, **dadurch gekennzeichnet, dass** das Betriebsmittel ein Internettelefon und/oder eine eMail-Box und/oder eine Voice-Box ist.

7. Verfahren nach einem der vorhergehenden Ansprüche, **dadurch gekennzeichnet, dass** dem Betriebsmittel ein allgemeiner Datensatz zugeordnet ist, der nutzerunabhängige Eigenschaften des Betriebsmittels festlegt,
und/oder dass der allgemeine Datensatz ein Datum enthält, das die Art des Betriebsmittels angibt,
und/oder dass der allgemeine Datensatz die Adresse des Rechners enthält, mit dessen Hilfe das Konfigurationsverfahren (16) ausgeführt wird,
und/oder dass der allgemeine Datensatz das Konfigurationskennzeichen oder einen Teil des Konfigurationskennzeichens enthält,
und/oder dass der allgemeine Datensatz einen Verweis auf Standarddaten enthält, die beim Festlegen der Nutzerkennzeichen (N1) genutzt werden,
und/oder dass der allgemeine Datensatz eine Bilddatei oder einen Verweis auf eine Bilddatei enthält, die zur Darstellung des Betriebsmittels dient.

8. Verfahren nach Anspruch 7, **dadurch gekennzeichnet, dass** dem Nutzerkennzeichen (N1) ein Verweisdatensatz zugeordnet ist, der einen Verweis auf den allgemeinen Datensatz enthält,
und/oder dass der Verweisdatensatz einen Verweis auf die Anwendungsdaten (32) enthält.

9. Verfahren nach einem der vorhergehenden Ansprüche, **dadurch gekennzeichnet, dass** die Anwendungsdaten (32) nutzerabhängige Daten enthalten,
und/oder dass die Anwendungsdaten (32) eine Netzzugangseinheit bezeichnen, über die der Nutzer Zugang zu einem Datenübertragungsnetz hat,
und/oder dass die Anwendungsdaten (32) eine Rufnummer enthalten, über die der Nutzer in einem durchschaltevermittelten Telefonnetz erreichbar ist,
und/oder dass die Anwendungsdaten (32) für den Nutzer ein lokales Nutzerkennzeichen enthalten, dessen Wert vorzugsweise mit dem Wert des Nutzerkennzeichens (N1) oder mit einem Tei des Wertes des Nutzerkennzeichens (N1) übereinstimmt,
und/oder dass die Anwendungsdaten (32) eine Adresse eines Datenübertragungsnetzes enthalten, unter der der Nutzer im Internet erreichbar ist,
und/oder dass die Anwendungsdaten (32) die Adresse eines Rechners enthalten, der zum Aufruf des zentralen Verfahrens (14) genutzt wird,
und/oder dass die Anwendungsdaten (32) das Nutzerkennzeichen (N1) oder einen Teil des Nutzerkennzeichens enthalten,
und/oder dass die Anwendungsdaten (32) ein Startkennzeichen enthalten, das zum Start des zentralen Verfahrens (14) verwendet wird.

10. Verfahren nach einem der vorhergehenden Ansprüche, **dadurch gekennzeichnet, dass** Standarddaten beim Festlegen des Nutzerkennzeichens (N1) und/oder beim Festlegen der Anwendungsdaten (32) als Vorgabewerte genutzt werden.

11. Verfahren nach einem der vorhergehenden Ansprüche, **dadurch gekennzeichnet, dass** die Nutzerdaten (10, 12) oder ein Teil der Nutzerdaten (10, 12) in einer Datenbeschreibungssprache gespeichert werden.

12. Verfahren nach einem der vorhergehenden Ansprüche, **dadurch gekennzeichnet, dass** die Verfahrensschritte (301 bis 905) des zentralen Verfahrens (14) und/oder des Konfigurationsverfahrens (16) beim Ausführen eines Java-Programms oder eines Verzeichnisdienstes erbracht werden.

13. Verfahren nach einem der vorhergehenden Ansprüche, **dadurch gekennzeichnet, dass** das Konfigurationsverfahren (14) Bestandteil des Anwendungsprogramms (24) ist oder dass das Konfigurationsverfahren (14) ein vom Anwendungsprogramm (24) getrenntes Verfahren ist.

14. Programm, **dadurch gekennzeichnet, dass** bei der Ausführung seiner Befehle durch einen Prozessor die auf das zentrale Verfahren (14) bezogenen Verfahrensschritte und/oder die auf das dezentrale Verfahren (16) bezogenen Verfahrensschritte nach einem der vorhergehenden Ansprüche ausgeführt werden.

15. Datenverarbeitungsanlage, **gekennzeichnet durch** ein Programm nach Anspruch 14.

16. Datenstruktur mit einem Nutzerkennzeichen (N1), das einen Nutzer (N1) bezeichnet, der ein Betriebsmittel nutzt oder nutzen möchte, dessen Funktion durch ein Anwendungsprogramm (24) erbracht wird,
und mit einem dem Nutzerkennzeichen (N1) zugeordneten Konfigurationskennzeichen (R1), mit dessen Hilfe ein Konfigurationsverfahren (16) ausgeführt werden kann, das zum Konfigurieren von Anwendungsdaten (32) dient.

17. Datenstruktur mit einem Nutzerkennzeichen (N1), das einen Nutzer (N1) bezeichnet, der ein Betriebsmittel nutzt oder nutzen möchte, dessen Funktion durch ein Anwendungsprogramm (24) erbracht wird,
und mit einem dem Nutzerkennzeichen (N1) zugeordneten Verweiskennzeichen, mit dessen Hilfe ein zentrales Verfahren (16) ausgeführt werden kann, das zu dem Nutzerkennzeichen (N1) ein Konfigurationskennzeichen zum Aufruf eines Konfigurationsverfahren (16) vermerkt.

18. Datenstruktur nach Anspruch 16 oder 17, **gekennzeichnet durch** Daten, auf die bei der Durchführung des Verfahrens nach einem der Ansprüche 1 bis 13 zugegriffen wird.
